Europäisches Patentamt

European Patent Office

Office européen des brevets

(11) Publication number: 0 420 655 A2

## (12) EUROPEAN PATENT APPLICATION

(21) Application number: 90310614.4

(22) Date of filing: 27.09.90

(51) Int. Cl.5: C08J 5/24, C08K 3/00, C08K 5/00, //C08J3/20

(30) Priority: 29.09.89 JP 256441/89

(43) Date of publication of application:
03.04.91 Bulletin 91/14

(84) Designated Contracting States:
DE FR GB

(71) Applicant: SUMITOMO CHEMICAL COMPANY, LIMITED
5-33 Kitahama 4-chome Chuo-ku
Osaka-shi Osaka(JP)

(72) Inventor: Morii, Akira
6-22 Oji-cho
Niihama-shi, Ehime(JP)
Inventor: Harakawa, Masaji
2-6-534, Ikku-cho
Niihama-shi, Ehime(JP)

(74) Representative: Diamond, Bryan Clive et al
Gee & Co., Chancery House, Chancery Lane
London WC2A 1QU(GB)

(54) Colored prepreg and colored fiber-reinforced resin molded article.

(57) A prepreg is prepared by mixing continuous fibers (e.g. of carbon or alumina) as reinforcement into a matrix consisting of by weight:

(a) 100 parts of a synthetic resin, preferably an epoxy, phenolic, unsaturated polyester or polyimide resin,

(b) 5 to 50 parts of a flaky colorant of average particle size 70 to 300 $\mu$m (e.g. a mica-based pearl pigment, titanium dioxide, aluminum powder) and

(c) 2 to 50 parts of a pigment of average size less than 70 $\mu$m and capable of hiding the color of the fibers substantially completely (e.g. powdered brass, aluminum or titanium dioxide).

The resin can be dissolved in a solvent or melted prior to mixing with the fibers, or dry mixed.

The prepreg can be molded to obtain sheets, tubes or molded articles.

The prepreg and moldings have a deep and lustrous hue with the reinforcing fibers being moderately hidden, and the color is retained even after polishing.

## COLORED PREPREG AND COLORED FIBER-REINFORCED RESIN MOLDED ARTICLE

This invention relates to a colored prepreg and a colored fiber-reinforced resin molded article.

High decorative effects have recently been required of various molded articles using fiber-reinforced prepregs.

Coloring of various articles is generally conducted by color coating. However, coloring by coating is planar and lacks in depth of color, and a coating is liable to be removed by abrasion.

It is known in the art that coloring of prepregs and fiber-reinforced resins can be done by coloring of a matrix resin.

For example, JP-A-62-30126 (the term "JP-A" as used herein means an unexamined published Japanese patent application ) discloses a colored prepreg for producing fiber-reinforced resin products, which is prepared by pre-impregnating a colorless reinforcement with a transparent resin having incorporated therein from 0.05 to 10% by weight of a dye or a pigment having a tinctorial power but no hiding power. This technique is applicable to only colorless reinforcements. In case of using a reinforcement having a color of its own, the color of the dye or pigment cannot be developed as expected.

An object of the present invention is to provide a colored prepreg having a widely variable high-grade hue with depth and luster with the color possessed by reinforcing fibers being moderately hidden, the color of which does not fall off.

Another object of the present invention is to provide a colored fiber-reinforced resin molded article obtained by molding the colored prepreg.

The present invention relates to a colored prepreg comprising reinforcing continuous fibers impregnated with a matrix resin comprising 100 parts by weight of a synthetic resin, from 5 to 50 parts by weight of a flaky colorant having an average particle size of from 70 to 300 μm and an average thickness of from 0.1 to 10 μm, and from 2 to 50 parts by weight of a hiding pigment having an average particle size of less than 70 μm.

The present invention further relates to a colored fiber-reinforced resin molded article obtained by molding the above-described colored prepregs.

Reinforcing continuous fibers which can be used in the present invention include conventional fibers for fiber-reinforced resins.

Examples of the reinforcing continuous fibers include inorganic fibers, such as glass fiber, carbon fiber, graphite fiber, alumina fiber, boron fiber, titania fiber and silicon carbide fiber; various natural fibers; synthetic fibers, such as cellulose derivative fibers, aramide fiber, polyester fiber, polyamide fiber, acrylic fiber, polyethylene fiber and polypropylene fiber; metallic fibers, such as steel fiber and stainless steel fiber; metal-coated inorganic or organic fibers; and ceramic-coated fibers.

The reinforcing fibers may have the form of a tow, a thin sheet, a woven fabric, etc.

The kind and form of the reinforcing fibers to be used are chosen according to performance properties required. The reinforcing fiber may be a mixture of two or more kinds or forms described above.

Synthetic resins which can be used in the present invention include conventional impregnating resins used for fiber-reinforced resins.

Examples of the resins include those which are thermosetting resins but exhibit fluidity and thermoplastic properties before curing, e.g., epoxy resins, phenol resins, alkyd resins, urea-formaldehyde resins, melamine-formaldehyde resins, unsaturated polyester resins, aromatic polyamide resins, polyimide resins, polyamideimide resins, polyesterimide resins, polybenzothiazole resins and silicone resins; thermo-plastic resins, e.g., polyethylene, polypropylene, acrylic resins, styrene resins, polyvinyl chloride, ABS resins, styrene-acrylonitrile copolymer resins, polyamide, polyacetal, polysulfone, polycarbonate, polyphenylene oxide, polyether sulfone and polyether ether ketone; and synthetic and natural rubbers, e.g., polybutadiene, polyisoprene, polychloroprene, styrene-butadiene copolymer rubbers, acrylonitrile-butadiene copolymer rubbers and silicone rubbers. These resins may be used as a mixture of two or more thereof. Among the above resins, epoxy resins, phenol resins, unsaturated polyester resins, and polyimide resins are preferably used in the present invention.

The flaky colorant which can be used in the present invention has an average particle size of from 70 to 300 μm, preferably from 100 to 200 μm, and an average thickness of from 0.1 to 10 μm, preferably from 0.1 to 5 μm. The flaky colorant is used in an amount of from 5 to 50 parts by weight, preferably from 10 to 30 parts by weight, per 100 parts by weight of the synthetic resin.

If the average size of the flaky colorant is less than 70 μm, luster of the resulting fiber-reihforced resin molded article is insufficient. In particular, the luster is reduced when the surface of the resin molded article is buffed or polished so as to have a smooth surface. If it exceeds 300 μm, dispersibility in synthetic resins is insufficient.

If the average thickness of the flaky colorant exceeds 10 μm, regular multiple reflection for development of luster becomes short. Incidentally, the minimum thickness of the general state-of-the-art flaky colorants is about 0.1 μm.

If the amount of the flaky colorant is less than 5 parts, luster properties are poor. An amount exceeding 50 parts not only makes no contribution to improvement of luster but increases the viscosity of a matrix resin, making impregnation of the resin into reinforcing fibers insufficient. Further, the proportion of the resin becomes small so that the finally obtained molded article has reduced mechanical properties.

Examples of the flaky colorants include naturally occurring colorants, e.g., sodium montmorillonite and mica; pearl pigments, e.g., titanium dioxide-coated mica, titanium dioxide coating-colored mica, natural pearl essence, and pigments colored by coating with various metal oxides; flaky metals; and flaky metal oxides. Specific examples of these flaky colorants include Iriodin 153 Flush Pearl, Iriodin 163 Shimmer Pearl, Iriodin 355 Gritter Gold (trade names of pearl pigments produced by Merck Corp.), MC-355 (trade name of a pearl pigment produced by Nippon Koken Kogyo K. K.), a gold flaky powder, a silver flaky power, an aluminum flaky powder, a copper flaky powder, a brass flaky powder, a bronze flaky powder, a titania flake, a silica flake, and an alumina flake. These flaky colorants may be selected depending on the desired color of the final product.

The hiding pigment which can be used in the present invention has an average particle size of less than 70 μm. It is used in an amount of from 2 to 50 parts by weight, preferably from 5 to 20 parts by weight, per 100 parts by weight of the synthetic resin. If the average particle size is 70 μm or more, hiding properties are insufficient. The hiding pigment may have any finer particle size if it is less than 70 μm. If the amount of the hiding pigment is less than 2 parts by weight, hiding properties are insufficient. If it exceeds 50 parts by weight, the matrix resin has an increased viscosity and cannot be satisfactorily impregnated into reinforcing continuous fibers only to provide a final molded article of reduced mechanical properties.

Specific examples of the hiding pigments include organic pigments, e.g., azo pigments, phthalocyanine pigments, quinacridone pigments, dioxane pigments, perinone pigments, anthraquinone pigments, isoindolinone pigments, quinophthalone pigments, and perylene pigments; inorganic white pigments, e.g., titanium dioxide, zinc sulfide, zinc oxide, lithopone, antimony oxide, lead hydroxycarbonate, lead oxysulfate, an alumina powder, a silica powder and a silica-alumina powder; inorganic chromatic oxide pigments, e.g., iron oxide, titanium yellow, chromium oxide and cobalt blue; inorganic sulfide pigments, e.g., cadmium red and cadmium yellow; inorganic silicate pigments, e.g., ultramarine; inorganic chromate pigments, e.g., chrome yellow; carbon black; and various metallic fine powders. These hiding pigments may be selected depending on the desired appearance of the final product.

Desired hiding properties are such that the color of the reinforcing fibers is covered substantially completely or the presence of the reinforcing fibers is perceptible only slightly.

The matrix resin to be impregnated is prepared by uniformly dispersing the flaky colorant and the hiding pigment in the synthetic resin in a known manner by, for example, fluidizing the synthetic resin by heat plasticization or addition of a solvent and mixing with the flaky colorant and the hiding pigment with stirring.

The matrix resin may further contain short fibers, whiskers, etc. generally used for fiber-reinforced resins.

Prepregs can be produced by impregnating the matrix resin into the reinforcing continuous fibers by known techniques for producing prepregs. For example, impregnation is carried out by a wet process in which reinforcing continuous fibers are dipped in a solution of the matrix resin in, a solvent and evaporating the solvent, or a dry process or a hot-melt process in which a molten matrix resin is impregnated into reinforcing continuous fibers as disclosed in JP-A-56-162642.

The resulting prepregs can be molded to obtain various fiber-reinforced resin molded articles by conventional methods. Molded articles include sheeting, tubing, and the like for various structural materials.

A molded article may be obtained by using a single prepreg or by laminating a plurality of prepregs which may be of the same or different kind, such as those of sheet molding compounds.

Molding can be carried out by press molding, autoclave molding, tape wrapping molding, filament winding molding, and the like.

The colored prepreg and the colored fiber-reinforced resin molded article according to the present invention have a widely variable high-grade hue with depth and luster with the color possessed by reinforcing fibers being moderately hidden. The color of the prepreg and the molded article thereof does not fall off as is observed in color coating.

The effect of the present invention is taken advantage of in using the molded article, e.g., a tubular molded article, as fishing rods, golf club shafts, etc. of high commercial value. In the production of such tubular products, the molded articles are usually subjected to buffing, followed by clear coating. The colored prepreg of the present invention is characterized by retaining its luster and hue even after buffing.

The present invention is now illustrated in greater detail with respect to Examples and a Comparative Example, wherein the parts and percentages are by weight.

## EXAMPLE 1

An epoxy resin composition was prepared by mixing 60 parts of a bisphenol A epoxy resin ("SUMIEPOXY ELA-134" produced by Sumitomo Chemical Co. , Ltd.), 40 parts of a cresol novolak epoxy resin ("SUMIEPOXY ESCN-220H" produced by Sumitomo Chemical Co., Ltd.), 5 parts of dicyandiamide as a curing agent, and 4 parts of 3-(3,4-dichlorophenyl)-1,1-dimethylurea as a curing accelerator.

In a container equipped with a stirrer was put 100 parts of the epoxy resin composition and melted at 65°C. The molten resin composition was mixed with 14 parts of a mica-based flaky pearl pigment ("Iriodin 355 Gritter Gold" produced by Merck Corp.; average particle size: 85 μm; average particle thickness: 0.5 μm) and 6 parts of a brass fine powder (particle size: 3 to 20 μm) to prepare a matrix resin.

The matrix resin was applied on a release sheet. Carbon fibers ("AS-4" produced by Hercules Co.; filament diameter: 7 μm) were unidirectionally put thereon and spread parallel with each other in sheet form. A release sheet was superposed thereon, and the sandwich structure was passed through press rolls heated at about 120°C under a linear pressure of 3 kg/cm to impregnate the matrix resin into the carbon fibers.

The resulting prepreg sheet had a width of 1 m, a length of 100 m, a fiber area weight of 100 g/m², and a resin content of 35%.

The prepreg sheet was wound in 3 turns around a metallic mandrel of 10 mm in diameter in such a manner that the fiber direction of the prepreg was consistent with the longitudinal direction of the mandrel. After the prepreg in roll was tied up with a polypropylene shrink tape, it was heated in a hot-air oven at 100°C for 1 hour and then at 130°C for 1 hour for curing to obtain a tubular molded article. The resulting molded article had metallic luster, with the black color of the carbon fibers being hidden.

The surface of the tubular molded article was buffed with a cotton cloth and then coated with an acrylic clear lacquer. The, resulting coated product had deep and soft metallic luster, with the black color of the carbon fibers remained hidden.

## EXAMPLE 2

The procedure of Example 1 was repeated, except for using alumina fibers having a filament diameter of 10 μm ("Altex" produced by Sumitomo Chemical Co., Ltd.) in place of the carbon fibers at a fiber area weight of 140 g/m² and the fibers were impregnated with the matrix resin to a resin content of 30%.

The resulting tubular molded article had deep metallic luster.

## EXAMPLE 3

The procedure of Example 1 was repeated, except for replacing the brass fine powder with 6 parts of a titanium dioxide powder having an average particle size of 0.055 μm.

The resulting tubular molded article had deep metallic luster, with the black color of the carbon fibers being hidden.

## EXAMPLE 4

A 30% resin solution was prepared by dissolving the same matrix resin as used in Example 1 in trichloroethylene. The solution was charged into an impregnating tank equipped with a roller and kept under stirring so that the flaky colorant and hiding pigment were always suspended in the solution uniformly.

An alumina fiber bundle comprising 1000 filaments each having a diameter of 10 μm ("Altex" produced by Sumitomo Chemical Co., Ltd.) was twisted by means of a ring spinning frame so as to have 30 twists per meter. The twisted filament bundle was passed through the impregnating bath along the roller so as to be impregnated with the resin solution and then through a drying zone kept at a temperature of 150°C to volatilize the solvent and wound around a paper tube to obtain an alumina fiber yarn prepreg.

A general-purpose unidirectional prepreg of carbon fiber ("AS-4/J 1201" produced by Sumika Hercules Co., Ltd.; fiber area weight: 100 g/m²; resin content: 35%) was wound to 3 turns around a metallic mandrel having a diameter of 10 mm in such a manner that the fiber direction was the same as the longitudinal direction of the mandrel, and the above-prepared alumina fiber yarn prepreg was spirally wound around the carbon fiber prepreg at a pitch of 15 mm.

The resulting coil was molded, buffed and coated in the same manner as in Example 1 to obtain a hybrid tubular molded article.

The outer portion comprising the alumina fiber yarn prepreg had deep metallic luster.

## EXAMPLE 5

The procedure of Example 2 was repeated, except for using 12 parts of aluminum foil flaky powder (produced by Hori Kinpakufun Co.; average particle size: 160 μm; average particle thickness: 8 μm) and 4 parts of a mica-based pearl pigment ("Iriodin 163 Shimmer Pearl" produced by Merck Corp.; average particle size: 120 μm; average particle thickness: 1.0 μm) in place of the l4 parts of "Iriodin 355 Gritter Gold"; and 4 parts of aluminum fine powder (produced by Hori Kinpakufun Co.; average particle size: 45 μm) in place of 6 parts of the brass fine powder.

The resulting tubular molded article had deep metallic luster.

## COMPARATIVE EXAMPLE 1

The procedure of Example 1 was repeated, except for using 14 parts of Iriodin 302 Gold Satin (produced by Merck Corp., average particle size: 15 μm; average particle thickness: 0.5 μm) in place of the Iriodin 355 Gritter Gold.

The resulting molded article was poor in metallic luster although the black color of carbon fibers was hidden.

## Claims

1. A colored prepreg comprising reinforcing continuous fibers impregnated with a matrix resin comprising by weight (a) 100 parts of a synthetic resin, (b) from 5 to 50 parts of a flaky colorant having an average particle size of from 70 to 300 μm and an average thickness of from 0.1 to 10 μm, and (c) from 2 to 50 parts of a hiding pigment having an average particle size of less than 70 μm.

2. A colored prepreg as claimed in Claim 1, wherein the amount by weight of said flaky colorant is from 10 to 30 parts and the amount of said hiding pigment is from 5 to 20 parts.

3. A colored fiber-reinforced resin molded article obtained by molding at least one colored prepreg as claimed in Claim 1 or 2.